# EUROPEAN PATENT SPECIFICATION

(11) **EP 0 537 712 B1**
(45) Date of publication and mention of the grant of the patent: **11.12.1996**
(21) Application number: 92117553.5
(22) Date of filing: 14.10.1992
(51) Int. Cl.: G11B 7/125, G11B 7/135

(54) **Optical pickup apparatus**
Optischer Abtastkopf
Tête de lecture optique

(30) Priority: 16.10.1991 JP 294806/91
(43) Date of publication of application: 21.04.1993
(73) Proprietor: SONY CORPORATION, Tokyo 141 (JP)
(72) Inventor: Asoma, Yoshito, c/o Sony Corporation, Shinagawa-ku, Tokyo (JP); Hineno, Satoshi, c/o Sony Corporation, Shinagawa-ku, Tokyo (JP)
(74) Representative: Melzer, Wolfgang, Dipl.-Ing.

(56) References cited:
- US-A- 4 235 507
- US-A- 4 720 825
- US-A- 5 033 042
- PATENT ABSTRACTS OF JAPAN vol. 8, no. 144 (P-284)(1581) 5 July 1984 & JP-A-59 042 647

## Description

### BACKGROUND OF THE INVENTION

### Field of the Invention

This invention relates to an optical pickup apparatus for recording information signals on an information recording medium, such as a magneto-optical disc. More particularly, it relates to an optical recording medium in which a light beam radiated on and reflected from the information recording medium is detected by a photodetector and in which focusing errors and tracking errors are produced on the basis of the detected output.

### Description of the Prior Art

An information recording medium for writing information signals by optical means has so far been-proposed A magneto-optical disc, typical of this type of the information recording medium, is made up of a disc substrate, and a signal recording layer. The signal recording layer is formed of a material having its direction of magnetization inverted by heating it to a temperature higher than the Curie temperature and applying a corresponding magnetic field. The optical pickup apparatus is employed for writing and reading information signals on or from the information recording medium.

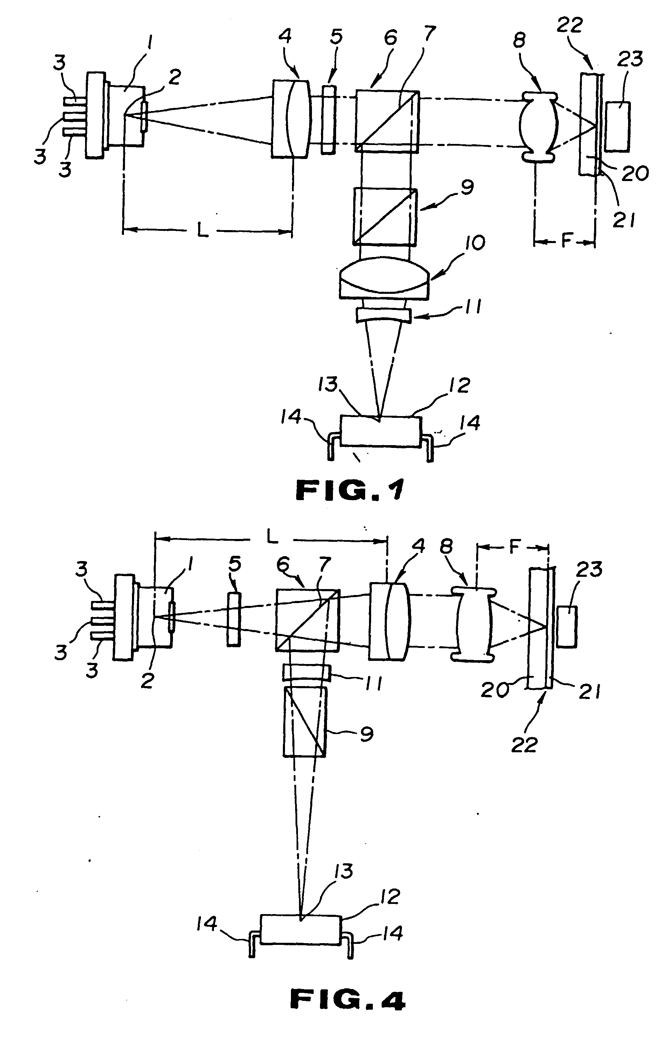

Referring to Fig.3, the optical pickup apparatus is made up of a laser diode device 1, as a light source, and an object lens 9, adapted for converging the light flux radiated from the laser diode element 1 on the signal recording layer. The optical pickup apparatus is also provided with a photodetector 12 for detecting the light flux converged on and reflected from the signal recording layer.

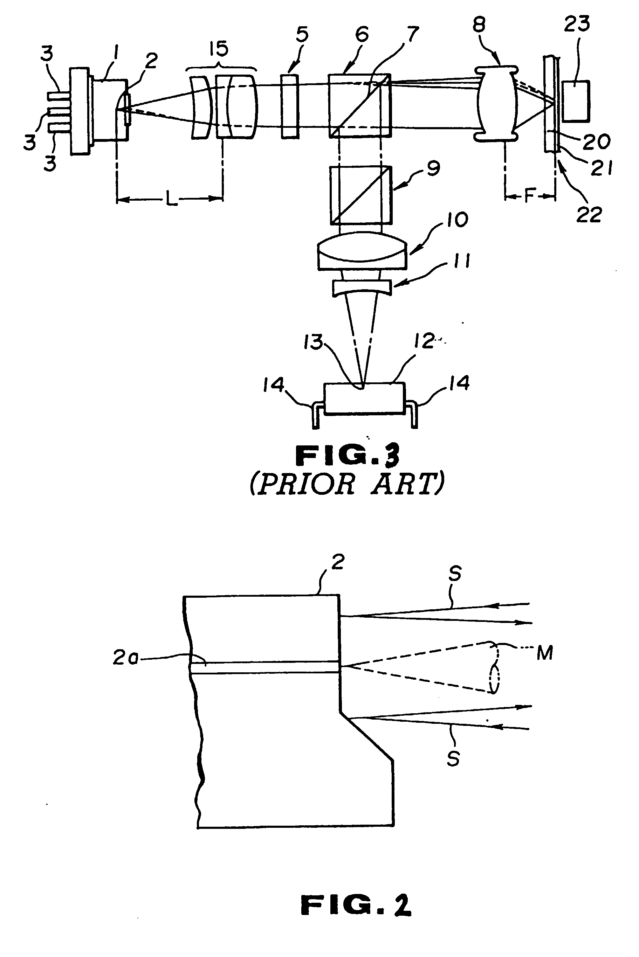

The laser diode device 2 is provided with a can-shaped package and radiates light by being supplied with current via plural terminals. The laser device 2 includes a semiconductor chip arranged in the package and radiated light from a terminal end of an active layer 2a of the semiconductor chip, as shown in Fig.2. The laser diode device is a point-shaped light source. The light flux radiated from the laser diode device 1 is collimated by a collimator lens 15 and passed through diffraction grating 5 for being divided into three parallel light fluxes which then fall on a polarized beam splitter 6. The light fluxes incident on the beam splitter 6 are transmitted through the beam splitter 6 before being incident on the object lens 8. The object lens 9 converges the light flux on a signal recording surface which is a boundary surface between a signal recording layer 21 of a magneto-optical disc 22 and a disc substrate 20.

On the signal recording surface, the information signals are written on a spirally extending substantially concentric recording tracks. The light fluxes divided by the diffraction grating 5 are radiated on the signal recording surface in the manner of striding over a recording track for carrying out a tracking error detection system known as a so-called three-beam system in which the volumes of the light of both side sub-beams reflected by the signal recording surface are compared to each other to detect the deviation of the radiated position of the central main beam with respect to the recording track.

The light flux converged on the signal recording surface is reflected by the signal recording surface so as to be re-incident as a reflected light flux on the object lens 8. The reflected light flux is collimated before being re-incident on the polarized beam splitter 6. The reflected light flux re-incident on the polarized beam splitter 6 is reflected for the most part by a reflecting surface 7 of the polarized beam splitter 6 so as to be incident on a three-beam Wollaston prism 11 making up photodetector means. The photodetector means is made up of the three-beam Wollaston prism 9, a converging lens 10, a cylindrical lens 11 for producing astigmatism in the transmitted light flux and a photodetector 13. The photodetector 13, made up of plural light-receiving surfaces, is arranged within a package 12 and adapted for outputting the intensities of the light fluxes received by the light-receiving surfaces as electrical signals at plural terminals 14 associated with the plural light-receiving surfaces. That is, the photodetector 13 is adapted for detecting changes in the light volume of the reflected light flux, changes in the state of the polarized light and changes in the degree of astigmatism for outputting the detected changes as electrical signals.

Meanwhile, the optical pickup apparatus utilizing the three-beam Wollaston prism is described in US Patent 4,771,414.

For writing information signals on the magneto-optical disc 22, the optical pickup device converges the flux of light radiated from the laser diode device 2 on the signal recording layer 21 for locally heating the signal recording layer 21. At this time, an external magnetic field is applied to the signal recording layer 21 by a magnetic device 23, as shown in Fig.3 The state of light flux convergence on the signal recording layer 21 and adjustment of the position of radiation of the light flux on the signal recording layer 21 may also be adjusted at this time based on the various information, such as so-called focusing errors and tracking signals, produced on the basis of electrical signals outputted from the magnetic head device 23. This adjustment operation is carried out by driving the object lens 8 by a biaxial actuator in a focusing direction along the optical axis of the lens 8 and in a tracking direction which is at right angles to the focusing direction.

The information signals may be read by the optical pickup device from the magneto-optical disc 22 on the basis of the information derived from the photodetector device 13 while the light flux radiated by the laser diode 2 is converged and radiated on the signal recording layer 21.

Meanwhile, when writing information signals on the magneto-optical disc 22 in the above-described optical pickup apparatus, it is necessary that a light flux of a larger light output power be radiated on the signal recording layer 21. To this end, the collimator lens 15 with as large a numerical aperture (NA) as possible is used in the above optical pickup apparatus to achieve effective utilization of the light flux radiated by the laser diode 2. That is, since the light flux radiated by the laser diode 2 is diffused within a Predetermined angular range, it becomes necessary to make use of a collimator lens having a numerical aperture corresponding to an angle larger than the predetermined angle for collimating the light flux for guiding the collimated light flux towards the object lens 8.

Consequently, the object lens 15 is selected to be of a larger numerical aperture and of a shorter focal distance as shown by arrow F in Fig.3. To this end, with the present optical pickup apparatus, the ratio of the focal distance of the object lens 8 shown by arrow F in Fig.3 to the focal distance of the collimator lens 15, that is the magnification factor of projection β_{A} of the laser diode on the signal recording surface 21 is selected to be 1/2.5 to 1/3.5. In a read-only optical pickup apparatus in which it is unnecessary to achieve efficient utilization of the light flux radiated by the laser diode 2, the magnification factor of projection β_{A} is selected to be 1/4.5 to 1/5.5.

On the other hand, it is desirable that the converging positions of the three light fluxes, resulting from the division by the diffraction grating 5, be as close to one another as possible to reduce the effects by e.g. changes in temperature.

However, if, with the optical pickup apparatus having the magnification of projection β_{A} of 1/2.5 to 1/3.5, the converged positions of the three light fluxes resulting from division by the diffraction grating 5 be close to one another, it is likely that the reflected light fluxes S, S of the sub-beams be returned to a semiconductor chip of the order of 100 µm in size of the laser diode 2, as shown in Fig.2. The reflected light fluxes S, S, known as return light fluxes, are those light fluxes which, after reflection by the signal recording surface, is transmitted through a reflecting surface 7 of the beam splitter 6 to reach the laser diode 2. These reflected light fluxes S, S are reflected again by the semiconductor chip to proceed towards the collimator lens 15 as a so-called stray light. This stray light affects optical characteristics of the optical pickup apparatus to a greater extent by e.g. interference with other light fluxes. For example, the stay light tends to affect the above-mentioned sub-beams to produce an offset in detecting tracking errors.

For reducing the effects by the stray light, a high-frequency current is superposed on a power source of the laser diode 2 for high frequency modulation of the intensities of light emission. However, a high-frequency oscillator for high frequency oscillation of the intensity of light emission of the laser diode 2 leads to increased size of the system in which the optical pickup apparatus is to be used.

On the other hand, with the optical pickup apparatus having the magnification of projection of 1/2.5 to 1/3.5, the magnification β_{B} of enlargement on the signal recording surface of the photodetector 13 is increased. If the magnification β_{B} of enlargement is increased, the ultimate magnification β of the optical pickup apparatus, that is the magnification of projection of the laser diode 2 on the light-receiving surface of the photodetector 13, is increased to render it impossible to facilitate the production because of difficulties in adjusting the position of the photodetector 13. Meanwhile, the ultimate magnification β is the product of the magnification of projection β_{A} and the magnification of enlargement β_{B}.

### OBJECTS AND SUMMARY OF THE INVENTION

It is an object of the present invention to provide an optical pickup apparatus in which the return light of the reflected light beam radiated on and reflected from the information recording medium towards a light source or its vicinity is prevented for maintaining satisfactory optical characteristics of the optical pickup apparatus.

It is another object of the present invention to provide an optical pickup apparatus in which information signals recorded on the information recording medium may be reproduced accurately and in which focusing errors and tracking errors may be detected accurately by a photodetector.

It is a further object of the present invention to provide an optical pickup apparatus which is reduced in size and may be produced easily.

In accordance with the present invention, there is provided an optical pickup apparatus for at least recording information signals on an optical recording medium including a substantially point-shaped light source, an optical element for dividing a light flux radiated from the point-shaped light source into at least three light fluxes having different proceeding directions, an object lens on which the light fluxes divided by the optical element are incident and which is adapted for converging the light fluxes on the optical recording medium, and optical detecting means for detecting each of said light fluxes reflected by said recording medium, characterised in that the light source is projected on the optical recording medium with a magnification in a range from 1/4 to 1/5. In this manner, the reflected light beam from the optical recording medium may be prevented from being returned to the vicinity of the light source even if the converging positions on the optical recording medium of the light beams divided by the light flux dividing device are brought to close to one another.

### BRIEF DESCRIPTION OF THE DRAWINGS

Fig. 3 is a schematic side elevational view showing an arrangement of a conventional optical pickup apparatus.

Fig. 2 is an enlarged side elevational view showing essential parts of a laser diode employed as a light source for the optical pickup apparatus shown in Fig.3.

Fig.1 is a schematic side elevational view showing an arrangement of an optical pickup apparatus according to the present invention.

Fig.4 is a schematic side elevational view showing an arrangement of a modification of an optical pickup apparatus according to the present invention.

### DESCRIPTION OF THE PREFERRED EMBODIMENT

Referring to Fig.1, an optical pickup apparatus according to the present invention includes a laser diode 2, as a light source, and an object lens 8, for converging the light flux radiated by laser diode 2 on a magneto-optical disc 22 as an information recording medium. The optical pickup apparatus also includes a photodetector 13 for detecting the light flux converged on and reflected back from the magneto-optical disc 2.

The laser diode 2 is arranged in a can-shaped package 1 and fed with current via plural terminals 3 to emit the light. The laser diode 2 is arranged as a semiconductor chip having an active layer at a mid part of the semiconductor chip. It the end of the active layer 2a which radiates the flux of light. The laser diode 2 is a substantially point-shaped light source.

The light flux radiated by laser diode 2 is collimated by a collimator lens 4. The collimated light flux is divided into three collimated light fluxes, having different proceeding directions, by being transmitted through a diffraction grating 5 as a light flux dividing device, so as to be incident on a beam splitter 6. The light fluxes incident on the beam splitter 6 are transmitted through the beam splitter 6 before being incident on the object lens 8. The light fluxes are converged by the object lens 8 on the signal recording surface which is a boundary surface between the signal recording layer 21 of the magneto-optical disc 22 and the disc substrate 20.

On the signal recording surface, the information signals are written along a spirally extending recording track. The light fluxes separated by the diffraction grating 4 are radiated on the signal recording surface so as to be astride a recording track for executing a tracking error detection system known as a so-called three-beam system, according to which the positional deviation between the radiated position of the main central beam and the recording track may be detected by comparing the volumes of reflected light of both side beams by the signal recording surface.

The light fluxes converged on the signal recording surface are reflected by the signal recording surface so as to be re-incident as reflected light fluxes on the beam splitter 6. The reflected light fluxes re-incident on the beam splitter 6 is substantially collimated so as to be re-incident on the beam splitter 6. The reflected light fluxes, re-incident on the beam splitter 6, are mostly reflected by a reflective surface 7 of the beam spitter 6 before being incident on a three-beam Wollaston prism 9 constituting the photodetector means.

The three-beam Wollaston prism is described in detail in the aforementioned US Patent 4,771,414.

The photodetector means is made up of the three-beam Wollaston prism 9, a converging lens 10, a cylindrical lens 11 producing astigmatism in the transmitted light fluxes and the photodetector 13. The reflected light fluxes, incident on the three-beam Wollaston prism 9, are transmitted through the three-beam Wollaston prism 9, the converging lens 10 and the cylindrical lens 11 in this order before being radiated on the photodetector 13.

The three-beam Wollaston prism 11 is formed by a pair of triangular prisms, each of which is a uniaxial crystal of quartz, rutile or calcite and which are bonded to each other to form a rectangular-shaped prism. The directions of crystal axis of the triangular prisms are normal to the optical axis and cross-linked at an angle of 45° with one another. The reflected light fluxes incident on the three-beam Wollaston prism 11 are incident substantially at right angle to the outer lateral sides of the three-beam Wollaston prism 11 so as to be obliquely transmitted through a junction surface of the two triangular prisms. Consequently, the reflected light flux is refracted in different directions, depending on the direction of polarization, when transmitted though the junction surface of the triangular prism, so that the reflected light flux is separated into three light fluxes by the prism 11.

The cylindrical lens 11 is a lens having cylindrical surfaces producing astigmatism in the light fluxes transmitted therethrough. That is, the reflected light flux transmitted through the cylindrical lens 11 is previously divided by the three-beam Wollaston prism 9 into three light fluxes having different proceeding directions depending on the difference in the direction of polarization. Besides, the reflected light fluxes undergo astigmatism by being transmitted through the cylindrical lens 11.

The photodetector 13 has plural light-receiving surfaces and is provided within a package 12. The photodetector 13 is adapted for outputting the intensities of the light fluxes received by the light-receiving surfaces via plural terminals 14 associated with the plural light-receiving surfaces as light detection signals which are electrical signals. The light fluxes converged on the light-receiving surfaces of the photodetector 13 are the reflected light fluxes already divided by the diffraction grating 5 and further divided in dependence upon the direction of polarization. Light detection signals corresponding to the intensities of the light fluxes may be obtained from output signals of the photodetector 13.

In the photodetector, changes in the light volumes of the reflected light fluxes, changes in the state of polarization or changes in the degree of astigmatism may be detected based on the light detection signals.

That is, difference signals of the light detection signals associated with the light fluxes resulting from division by the three-beam Wollaston prism 9 represent readout signals of the information signals written on the magneto-optical disc 22.

On the other hand, difference signals of the light detection signals associated with the light fluxes resulting from division by the diffraction grating 5 represent so-called tracking error signals indicating deviation of the main beam from the recording track.

Besides, the light fluxes received by the light-receiving surfaces undergo astigmatism depending on the defocusing of the light fluxes on the signal recording surface of the magneto-optical disc 22. Therefore, signals indicating the quantity of defocusing on the signal recording surface of the magneto-optical disc 22, that is so-called focusing error signals, may be produced by detecting the state of astigmatism by receiving a given reflected light flux by foul equiangularly divided light-receiving surfaces of the photodetector 13.

When writing information signals on the magneto-optical disc 22 by the optical pickup apparatus, the light flux radiated by the laser diode 2 is converged on the signal recording layer 21 of the magneto-optical disc 22 for locally heating the signal recording surface 21. Simultaneously, an external magnetic field is applied by the magnetic head device 23 on the signal recording layer 21. The object lens 8 is driven so as to be moved depending on various control signals, such as focusing error signals or tracking error signals produced by the photodetector 13 for adjusting the state of convergence of the light flux on the signal recording layer 21 or the position of radiation of the light fluxes on the signal recording layer 21.

The information signals may be read by the optical pickup apparatus from the magneto-optical disc 22 on the basis of signals obtained from photodetector 13 while the light flux radiated by the laser diode 2 is converged on the signal recording layer 21.

Meanwhile, in the present optical pickup apparatus, the ratio of the focal distance of the object lens 8 as indicated by arrow F in Fig.1 to the focal distance of the collimator lens 4 as indicated by arrow L in Fig. 3, that is the magnification of projection β_{A} of the laser diode 2 on the signal recording layer 21, is selected to be 1/4 to 1/5.

Therefore, in the present optical pickup apparatus, even when the converging positions on the signal recording surface of the light fluxes divided by the diffraction grating 5 are close to one another, there is no risk that the return light flux, among the reflected light fluxes of the sub-beams, which is transmitted through the beam splitter 6, be returned to the surface of the semiconductor chip which is of a size of the order of 100 µm. Consequently, in the present optical pickup apparatus, there is no risk of generation of the so-called stray light beam.

Besides, in the present optical pickup apparatus, the ratio of the light fluxes incident on the collimator lens 4 to the total light flux radiated by the laser diode 2, that is the beam utilization efficiency, is slightly higher than that in the read-only optical pickup apparatus, so that information signals may be written unobjectionably.

In the present optical pickup apparatus, the magnification of enlargement β_{B} of the signal recording surface of the magneto-optical disc 22 on the light-receiving surface of the photodetector 13 is selected to be 8 to 10 which is smaller than the magnification of enlargement β_{B} in the conventional optical pickup apparatus capable of writing information signals. The fact chat the magnification of enlargement β_{B} is small leads to a smaller value of the ultimate magnification β in the present optical pickup apparatus, that is a smaller value of the magnification of projection on the light-receiving surface of the photodetector 13 and hence to facilitated positioning adjustment of the photodetector 13. The ultimate magnification β is the product of the magnification of projection β_{A} and the magnification of enlargement β_{B}, as stated previously.

In the optical pickup apparatus according to the present invention, the beam splitter 6 may be provided between he laser diode 2 and the collimator lens 4, as shown in Fig.4. In this case, the light flux radiated from the laser diode 2 is transmitted through the diffraction grating 5 and the beam splitter 6 in this order before being incident on the collimator lens 4. The light flux incident on the collimator lens 4 is collimated before being incident on the object lens 8. The light flux is then converged by the object lens 8 on the signal recording surface which is the boundary surface between the signal recording layer 21 of the magneto-optical disc 22 and the disc substrate 20.

The light fluxes converged on the signal recording surface are reflected by the signal recording surface before being re-incident as the reflected light fluxes on the object lens 8. The reflected light fluxes re-incident on the object lens 8 are substantially collimated before being re-incident on the collimator lens 4. The reflected light fluxes re-incident on the beam splitter 6 are mostly reflected by the reflective surface 7 of the beam splitter 6 before being incident on the cylindrical lens 11. The reflected light fluxes transmitted through the cylindrical lens 11 are transmitted through the three-beam Wollaston prism 9, while being progressively converged, until they are ultimately converged on the light-receiving surfaces of the photodetector 13.

The photodetector means in the present optical pickup apparatus is made up of the three-beam Wollaston prism 9, cylindrical lens 11 and the photodetector 13.

In the present optical pickup apparatus, similarly to the optical pickup apparatus of the preceding embodiment, the ratio of the focal distance of the object lens 8 as indicated by arrow F in Fig.4 to the focal distance of the collimator lens 4 as indicated by arrow L in Fig.4, that is the magnification of projection β_{A} of the laser diode 2 on the signal recording layer 21, is selected to be 1/4 to 1/5. Therefore, in the present optical pickup apparatus, even when the converging positions on the signal recording surface of the light fluxes divided by the diffraction grating 5 are brought to close to one another, there is no risk that the return light flux, among the reflected light fluxes of the sub-beams, which is transmitted through the beam splitter 6, be returned to the surface of the semiconductor chip of the laser diode 2.

In the optical pickup apparatus according to the present invention, the multiplication factor of optical projection of the light source on the information recording medium is selected to be 1/4 to 1/5, so that, even when the converging positions on the information recording medium of the light fluxes divided by the light flux dividing device is brought to positions close to one another, the reflected light fluxes from the information recording medium may be prevented from being returned to the vicinity of the light source.

Consequently, it is unnecessary to make high frequency modulation of the intensity of the light flux radiated from the light source for inhibiting the effects of the so-called stray light. On the other hand, it is unnecessary to increase the multiplication factor of enlargement on the photodetector means of the converging points on the information recording medium, so that facilitated production and adjustment of the photodetector means may be achieved.

## Claims

1. An optical pickup apparatus for recording information signals on an optical recording medium(22), comprising a substantially point-shaped light source (2), an optical element (5) for dividing a light flux radiated from said point-shaped light source (2) into at least three light fluxes having different proceeding directions, an object lens (8) on which the light fluxes divided by said optical element (5) are incident and which is adapted for converging said light fluxes on said optical recording medium (22), and optical detecting means (13) for detecting each of said light fluxes reflected by said recording medium (22), characterised in that the light source (2) is projected on the optical recording medium (22) with a magnification in a range from 1/4 to 1/5.

2. The optical pickup apparatus according to claim 1 comprising a collimator lens (4) arranged on a light path from said light source (2) to said object lens (8), the ratio of the focal distance ofsaid object lens (8) to the focal distance of said collimator lens (15) being 1/4 to 1/5.

3. The optical pickup apparatus according to claim 1 or 2 further comprising a beam splitter (6) arranged on a light path from said collimator lens (4) to said object lens (8) and being adapted for separating the light flux outgoing from said light source (2) from the light flux from said light source (2) reflected by said optical recording medium (22).

4. The optical pickup apparatus according to claim 1 or 2 further comprising a beam splitter (6) arranged on a light path from said collimator lens (4) to said light source (2) and being adapted for separating the light flux outgoing from said light source (2) from the light flux from said light source (2) reflected by said optical recording medium (22).

5. The optical pickup apparatus according to anyone of claims I to 4 wherein said point-shaped light source (2) comprises a semiconductor laser device.

## Patentansprüche

1. Optische Abtastvorrichtung zum Aufzeichnen von Informationssignalen auf einem optischen Aufzeichnungsmedium (22) mit
einer im wesentlichen punktförmigen Lichtquelle (2),
einem optischen Element (5) zum Aufteilen des von der punktförmigen Lichtquelle (2) ausgestrahlten Lichtstroms in wenigstens drei Lichtströme mit unterschiedlichen Ausbreitungsrichtungen,
einem Objektiv (8), auf das die von dem optischen Element (5) aufgeteilten Lichtströme auftreffen und das diese Lichtströme auf dem optischen Aufzeichnungsmedium (22) zur Konvergenz bringen kann,
und einer optischen Detektoreinrichtung (13) zum Detektieren jedes der von dem optischen Aufzeichnungsmedium (22) reflektierten Lichtströme,
**dadurch gekennzeichnet,**
daß die Lichtquelle (2) mit einer im Bereich von 1/4 bis 1/5 liegenden Vergrößerung das optische Aufzeichnungsmedium (22) projiziert wird.

2. Optische Abtastvorrichtung nach Anspruch 1 mit einer Kollimatorlinse (4), die in dem von der Lichtquelle (2) zu dem Objektiv (8) führenden Lichtpfad angeordnet ist, wobei das Verhältnis der Brennweite des Objektivs (8) zur Brennweite der Kollimatorlinse (4) 1/4 bis 1/5 beträgt.

3. Optische Abtastvorrichtung nach Anspruch 1 oder 2, ferner mit einem in dem von der Kollimatorlinse (4) zu dem Objektiv (8) führenden Lichtpfad angeordneten Strahlenteiler (6) zur Trennung des von der Lichtquelle (2) ausgehenden Lichtstroms von dem von dem optischen Aufzeichnungsmedium (22) reflektierten Lichtstrom der Lichtquelle (2).

4. Optische Abtastvorrichtung nach Anspruch 1 oder 2, ferner mit einem in dem von dem Kollimatorlinse (4) zu der Lichtquelle (2) führenden Lichtpfad angeordneten Strahlenteiler (6) zur Trennung des von der Lichtquelle (2) ausgehenden Lichtstroms von dem von dem optischen Aufzeichnungsmedium (22) reflektierten Lichtstrom der Lichtquelle (2).

5. Optische Abtastvorrichtung nach einem der Ansprüche 1 bis 4, bei der die punktförmige Lichtquelle (2) eine Halbleiterlaseranordnung aufweist.

## Revendications

1. Dispositif d'enregistrement optique pour enregistrer des signaux d'information sur un support d'enregistrement optique (22), comportant une source lumineuse sensiblement ponctuelle (2), un élément optique (5) pour séparer un flux lumineux rayonné par ladite source lumineuse ponctuelle (2) en au moins trois flux lumineux possédant des directions de progression différentes, un objectif (8) sur lequel frappent les flux lumineux séparés par ledit élément optique (5) et qui est adapté pour concentrer lesdits flux lumineux sur ledit support d'enregistrement optique (22), et des moyens de détection optiques (13) pour détecter chacun desdits flux lumineux réfléchis par ledit support d'enregistrement (22), caractérisé en ce que la source lumineuse (2) est projetée sur ledit support d'enregistrement optique (2) avec un grossissement compris entre 1/4 et 1/5.

2. Dispositif d'enregistrement optique selon la revendication 1, comportant une lentille collimatrice (4) disposée sur un trajet lumineux allant de ladite source lumineuse (2) vers ledit objectif (8), le rapport de la distance focale dudit objectif (8) à la distance focale de ladite lentille collimatrice (15) étant compris entre 1/4 et 1/5.

3. Dispositif d'enregistrement optique selon la revendication 1 ou 2, comportant en outre un diviseur de faisceau (6) disposé sur le trajet lumineux allant de la lentille collimatrice (4) audit objectif (8) et étant adapté pour séparer le flux lumineux provenant de ladite source lumineuse (2) dudit flux lumineux de ladite source lumineuse (2) réfléchi par ledit support d'enregistrement optique (22).

4. Dispositif d'enregistrement optique selon la revendication 1 ou 2, comportant en outre un diviseur de faisceau (6) disposé sur un trajet lumineux allant de la lentille collimatrice (4) à ladite source lumineuse (2) et étant adapté pour séparer le flux lumineux provenant de ladite source lumineuse (2) dudit flux lumineux de ladite source lumineuse (2) réfléchi par ledit support d'enregistrement optique (22).

5. Dispositif d'enregistrement optique selon l'une quelconque des revendications 1 à 4, dans lequel ladite source lumineuse ponctuelle (2) comprend un dispositif laser semiconducteur.
